# EUROPEAN PATENT APPLICATION

(11) **EP 4 755 163 A1**
(43) Date of publication of application: **10.06.2026**
(21) Application number: 24847446.2
(22) Date of filing: 30.07.2024
(51) Int. Cl.: A01C 7/16

(54) **STRUCTURAL ARRANGEMENT IN A SEED DISPENSER WITH POSITIVE AIR PRESSURE**

(30) Priority: 31.07.2023 BR 202023015343 U; 23.07.2024 BR 202024015087 U
(71) Applicant: Agrosystem Indústria, Comércio, Importação e Exportação Ltda, 14095-160 Ribeirão Preto (BR)
(72) Inventor: BECK RAD, José Inácio, 90035-110 Porto Alegre (BR); MORAES LOPES, Maiquel, 90250-140 Porto Alegre (BR); PORTELLA, José Antonio, 99070-140 Passo Fundo (BR); KOHMANN, Henrique, 92025-765 Canoas (BR); BERNARDES, Wagner, 14680-000 Jardinópolis (BR)
(74) Representative: Studio Torta S.p.A.
(86) International application number: PCT/BR2024/050334
(87) International publication number: WO 2025/024911

(57) **Abstract**

Seed dosing device used in seeders, comprising in its main configuration two integrated and concentrically mounted electric motors (1, 2) one inside the other and radially aligned in the same circular housing (3), wherein the motor (1) drives the perforated disc (17), while motor (2) drives a fan (15), this assembly being housed inside an external fairing (12A) shaped as a truncated cone, where its smaller base is closed by a circular cover (12B) and, on the opposite side, the closure is achieved by a rotating perforated disc (17), having at least a series of holes (F) forming a collar, which, on the inside, are selectors for the seeds to be dosed, such seeds being introduced through the lower part of the said circular cover (12B), where there is an inlet (13), while the exit of the seeds occurs by means of a seed conducting duct (27) tangentially inserted in a lateral flattening of the external fairing (12A).

## Description

This patent application for Utility Model claims internal priority from process BR 20 2023 015343 2, filed on 07/31/2023, under Law N° 9,279 of May 14, 1996.

### TECHNICAL FIELD

This Utility Model refers to technical and functional improvements introduced in a pneumatic seed dosing device having positive air pressure for use in different seeding machines.

### STATE OF THE ART

Currently, a wide variety of seed dosing devices are known, as shown for example in the patent documents US 3999690, BR 102015033036, BR 1020180148990 and BR 102015033036.

It is well known that seeding machines come in different sizes, from manual ones to large ones. Thus, depending on the size of the seeding machine, it can be equipped with a few or dozens of seed dosing devices.

The technological advancement of seeding machines, in general, has always been accompanied by improvements introduced in seed dosing devices.

Currently, the vast majority of seeding machines use dosing systems (dosing devices) that operate using a vacuum system; consequently, several vacuum lines (hoses) are required for their operation, since each dosing system is controlled and operates independently of the others.

Nowadays, seeding machines that use vacuum seed dosing systems require at least one central turbine to generate vacuum or positive pressure, so that several dosing systems can serve many planting rows.

Some seeding machines require more than one large turbine to generate the necessary vacuum in all the dosing systems, each to serve one planting row. Currently, seeding machines are already being produced where the number of dosing devices exceeds 70 units.

In this way, central vacuum turbine generation systems present a series of drawbacks, such as pressure losses due to the distances of each line between the dosing device and the central turbine; large quantities of piping and connections between the two parts; they require more maintenance; and all this ends up increasing the final costs for the farmer.

### OBJECTIVES OF THE INNOVATION

A new constructive arrangement applied to a pneumatic dosing device having positive air pressure is provided, which, in addition to being compact, offers the farmer a new pneumatic system with positive air pressure, wherein each dosing device generates its own pressure through operation of a motor that drives an individual internal turbine.

Another objective of this Utility Model is the realization of a constructive arrangement that provides a single circular housing having all the means for mounting two integrated electric motors, one inside the other, also radially aligned, wherein the internal electric motor drives a fan or turbine, while the external electric motor rotates a perforated disc for seed dosing, resulting in a very compact unit.

The dual electric motorization drastically reduces the complexity of assembling the unit and its final cost, and completely eliminates the use of air/vacuum hoses found in typical seeding machines used to drive each seed dosing device in each planting row.

Therefore, the ultimate objective is provide a pneumatic seed dosing device having positive air pressure and electric drive, both for the perforated disc and for the turbine of each seed dosing disc, making its operation more efficient in each planting row.

Since said drive motors are integrated, i.e., mounted one inside the other, consequently this arrangement outperforms conventional systems in a significant way, not only because it allows a marked reduction in the size of the dosing device, but also because it guarantees synchronized operation, which does not occur in the state of the art, since all of them operate by means of physically separate motors.

Another advantage of this Utility Model is the fact that the two integrated motors and other parts of the dosing device offer means for easy integration with an electronic control system, especially those developed to detect faults or double seeds. The said control will automatically act on the dosing device pressure to correct these anomalies. This is possible due to the existence of a turbine in each dosing device, i.e., in each planting row.

Additionally, another objective of the present innovation is to provide a first constructive variant of said dosing device, which maintains the same functionalities and advantages of its main configuration, however it allows the arrangement of an external electric motor to drive the perforated disc.

Another objective of the present innovation is to provide a second constructive variant of said dispenser, which maintains the same functionalities and advantages of its main configuration, however without using an electric motor to drive the perforated disc, so that the perforated disc is driven by an agricultural or seeder machine.

Furthermore, a final objective of the present invention is to provide a third constructive variant of said dosing device, which maintains the same functionalities and advantages as its main configuration, however without using an electric motor to drive the perforated disc, so that the perforated disc is driven by an agricultural or seeder machine, said third constructive variant also being equipped with a clutch component, which allows admitting or blocking the seed entry into a conducting duct, controlling the fall of seeds onto the soil.

Moreover, both the main configuration and the constructive variants of the dosing device are equipped with a BrushLess Direct Current (BLDC) motor to drive the turbine, as well as, in the main configuration of the dosing device, said brushless motor is also used as a means of driving the perforated disc, bringing the advantages of the brushless motor to all configurations of the present dosing device. Furthermore, both the main configuration and its constructive variants preferentially use a motor having an external rotor to drive the turbine, which makes the assembly more compact and efficient for heat dissipation and operation of the dosing device, especially the pneumatic circuit.

Finally, a last objective of the present innovation is to present new elements and characteristics with functional improvements in both the use and manufacture of a seed dosing device, more specifically functional elements and characteristics of said dosing device, which comprise a conducting tube or duct, an outlet nozzle or additional outlet piece, a seed ejection chamber or ejector device, an air outlet arrangement, among other elements, which are detailed and claimed by the present innovation.

### BRIEF DESCRIPTION OF THE DRAWINGS

For a better understanding of the present Utility Model, its detailed description is provided below, with reference to the attached drawings listed below:
- Figure 1 represents a perspective view of the perforated disc side, showing the dosing device fully assembled;
- Figure 2 shows a perspective view of the opposite side of the dosing device, where the seed inlet and outlet are located;
- Figure 3 illustrates an elevation view with indications of sections "A-A" and "B-B";
- Figure 4 is an exploded perspective view showing each component of the dosing device;
- Figure 5 shows an enlarged view of the section "A-A" indicated in Figure 3;
- Figure 6 represents an isometric view of the section "A-A" indicated in Figure 3;
- Figure 7 is an enlarged view of the section B-B indicated in Figure 3;
- Figure 8 is a perspective view of a conducting duct;
- Figure 9 shows a side view of the conducting duct;
- Figure 10 shows a second perspective view of the conducting duct;
- Figure 11 shows a perspective view of an outlet nozzle;
- Figure 12 shows a front view of the outlet nozzle;
- Figure 13 shows a top view of the outlet nozzle;
- Figure 14 shows a bottom view of the outlet nozzle;
- Figure 15 shows a rear view of the outlet nozzle;
- Figure 16 shows a right side view of the outlet nozzle;
- Figure 17 shows a left side view of the outlet nozzle;
- Figure 18 shows a perspective view of an ejector device;
- Figure 19 shows a perspective view of the front cover illustrating a portion of the ejector device;
- Figure 20 shows a top view of the ejector device;
- Figure 21 shows a bottom view of the ejector device;
- Figure 22 shows a left side view of the ejector device;
- Figure 23 shows a right side view of the ejector device;
- Figure 24 shows a front view of the ejector device;
- Figure 25 shows a rear view of the ejector device;
- Figure 26 shows a front view of the ejector device adjacent to the perforated disc;
- Figure 27 shows a perspective view of the dosing device illustrating an air outlet of the device;
- Figure 28 shows a perspective view of the dosing device with the front cover removed, illustrating the internal elements of the air outlet of the device;
- Figure 29 shows a perspective view of the internal portion of the front cover illustrating internal elements of the air outlet of the device;
- Figure 30 shows an enlarged view of the internal portion of the front cover illustrating internal elements of the air outlet of the device;
- Figure 31 shows a perspective view of an air outlet plate;
- Figure 32 shows a front view of the air outlet plate;
- Figure 33 shows a rear view of the air outlet plate;
- Figure 34 shows a top view of the air outlet plate;
- Figure 35 shows a bottom view of the air outlet plate;
- Figure 36 shows a right side view of the air outlet plate;
- Figure 37 shows a left side view of the air outlet plate;
- Figure 38 shows a front perspective view of a first variant of the dosing device, illustrating an external motor;

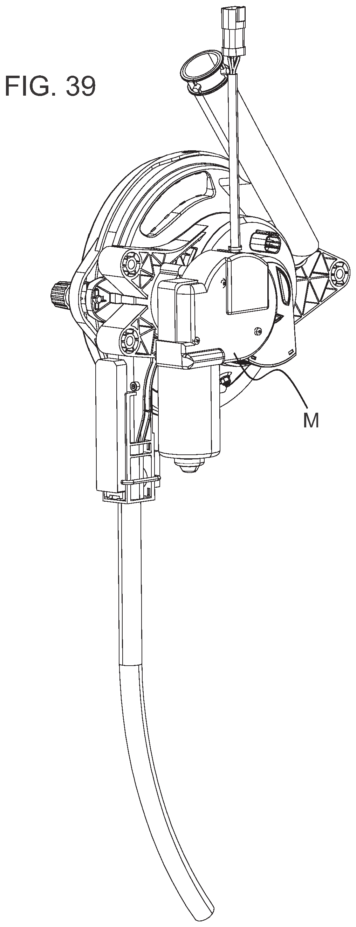

- Figure 39 shows a rear perspective view of the first variant of the dosing device, illustrating the external motor;

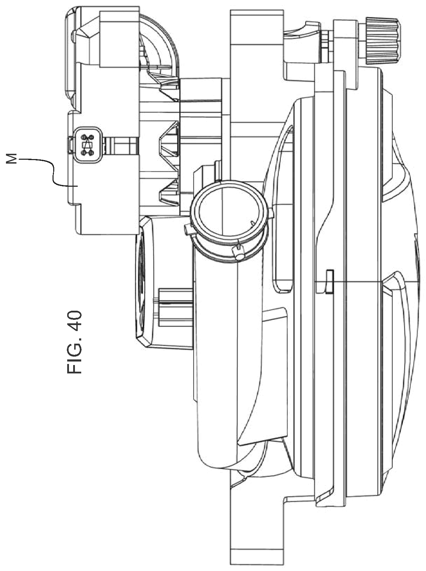

- Figure 40 shows a top view of the first variant of the dosing device, illustrating the external motor;

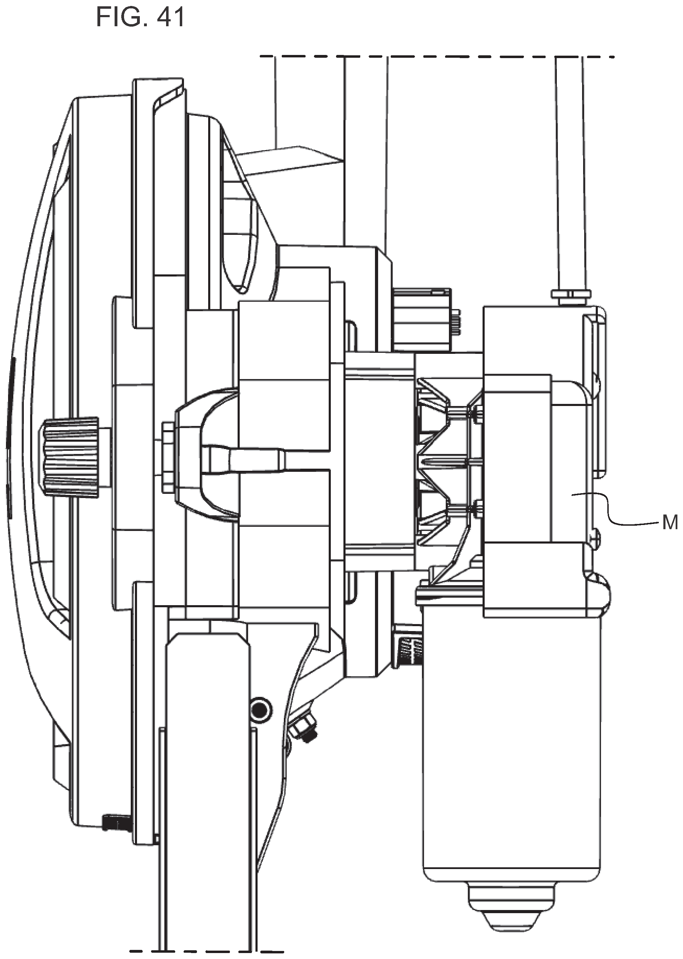

- Figure 41 shows a side view of the first variant of the dosing device, illustrating the external motor;

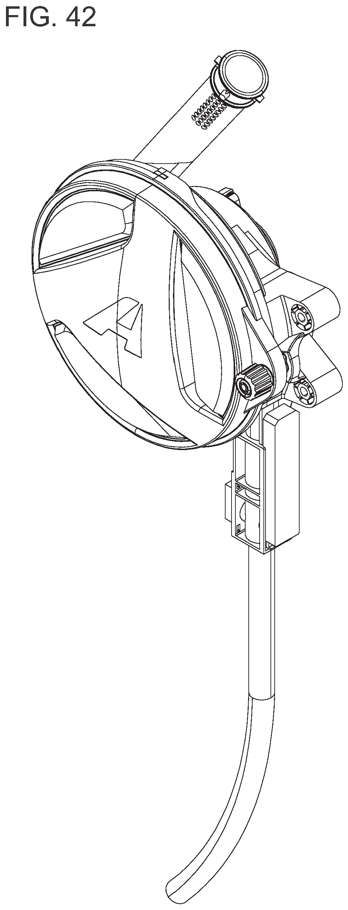

- Figure 42 shows a front perspective view of a second and third variants of the dosing device;

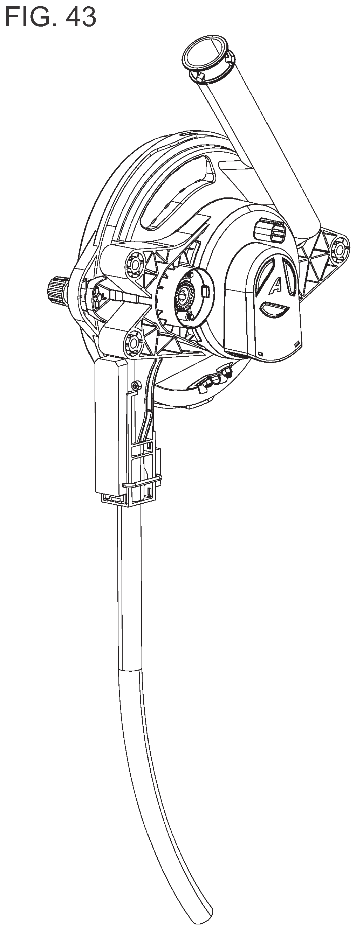

- Figure 43 shows a rear perspective view of the second and third variant of the dosing device;

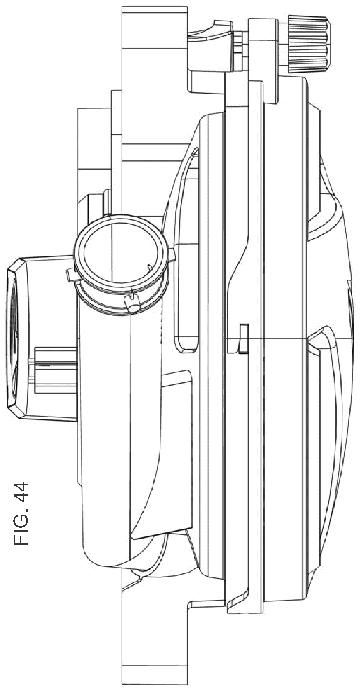

- Figure 44 shows a top view of the second and third variants of the dosing device;

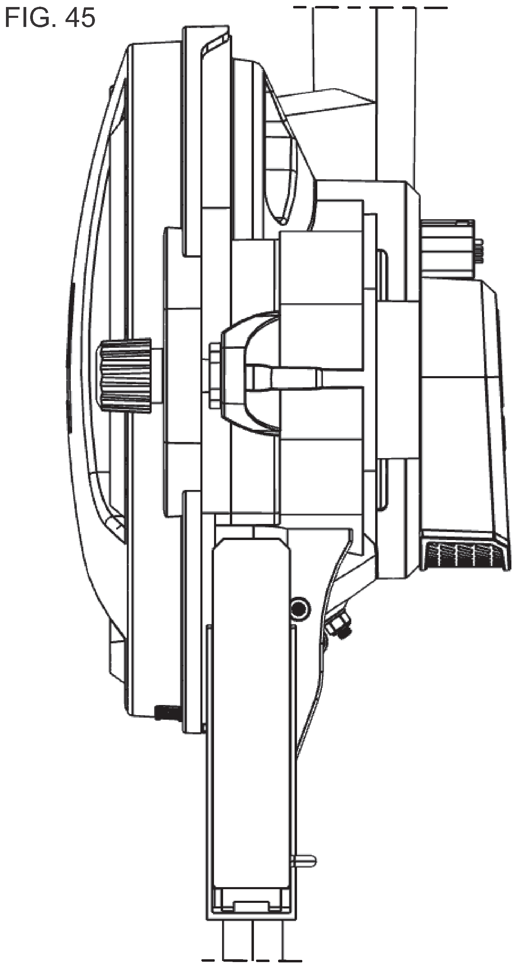

- Figure 45 shows a side view of the second and third variants of the dosing device;

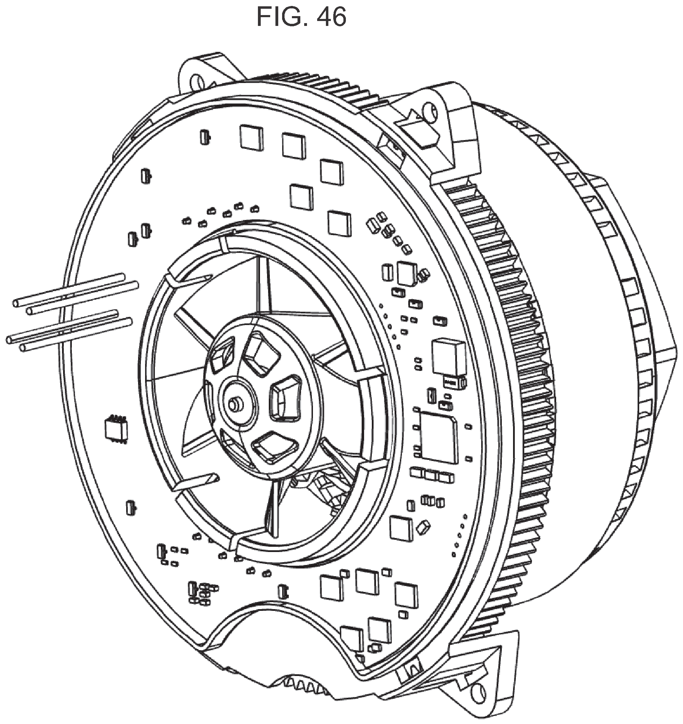

- Figure 46 shows a perspective view of the turbine assembled to the dosing device;
- Figure 47 shows an exploded view of the dosing device turbine assembly, in a configuration having the rotor external to the stator;
- Figure 48 shows a second exploded view of the dosing device turbine assembly, in a configuration having the rotor external to the stator; and
- Figure 49 shows a perspective view of the turbine motor core of the dosing device, in a configuration having the rotor external to the stator.

### DETAILED DESCRIPTION OF THE UTILITY MODEL

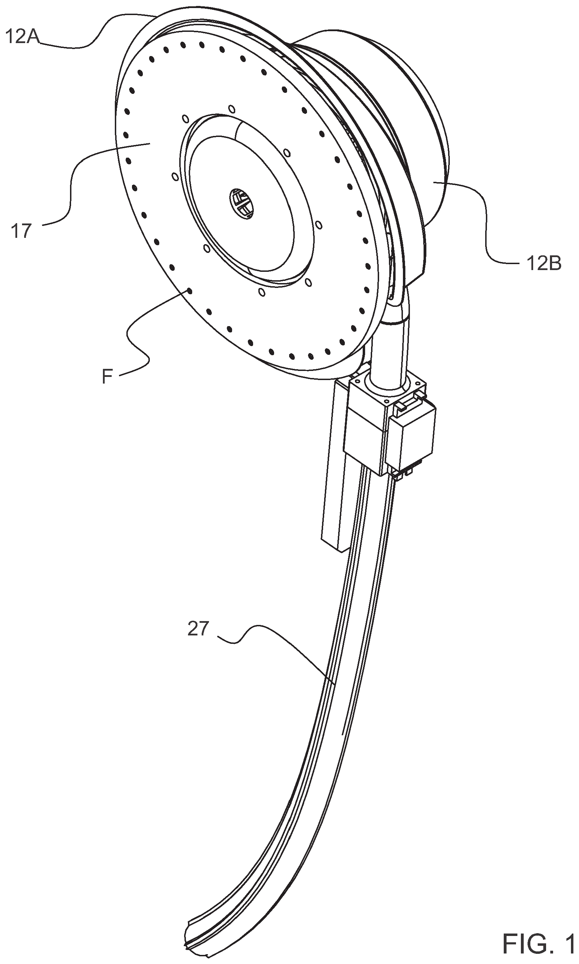

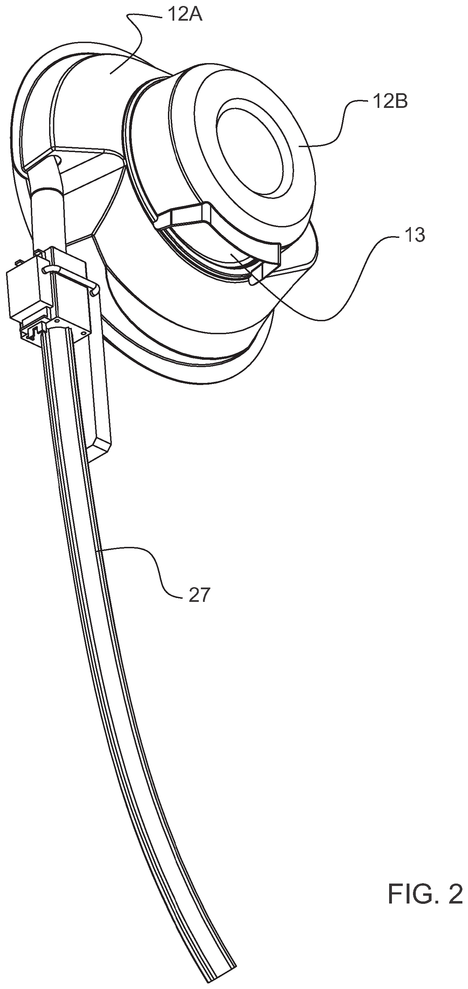

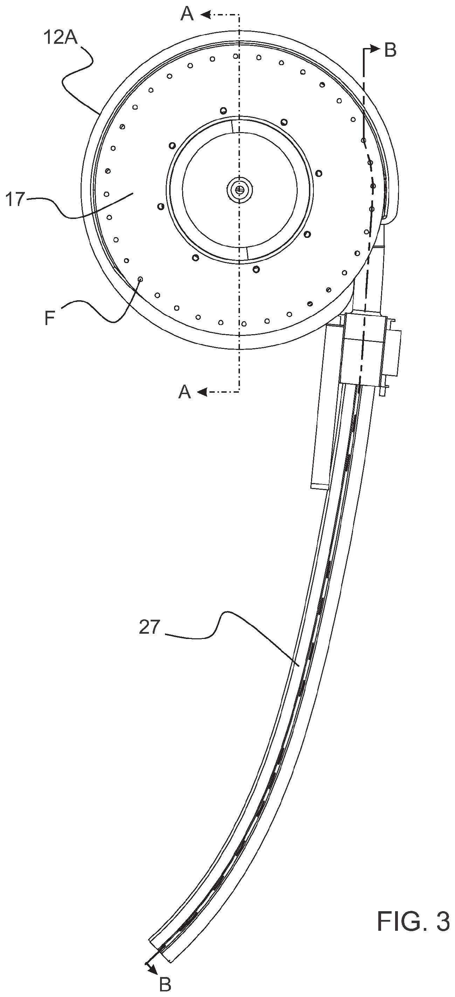

According to the drawings and their details, more specifically with reference to Figures 1, 2 and 3, the present Utility Model provides a constructive arrangement of a seed dosing device having positive air pressure, which is of a type to be used in different automatic seeding machines; said dosing device is configured as a box totally closed by an external fairing (12A) shaped as a truncated cone, where its smaller base is closed by a circular cover (12B) and, on the opposite side, the closure is achieved by a rotating perforated disc (17), having at least a series of holes (F) forming a collar, which, on the inside, are selectors for the seeds to be dosed, such seeds being introduced through the lower part of the said circular cover (12B), where there is an inlet (13), while the exit of the seeds occurs by means of a seed conducting duct (27) tangentially inserted in a lateral flattening of the external fairing (12A).

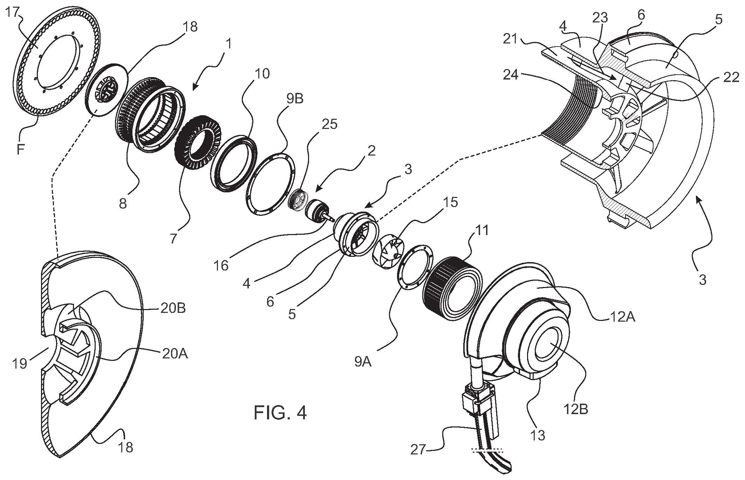

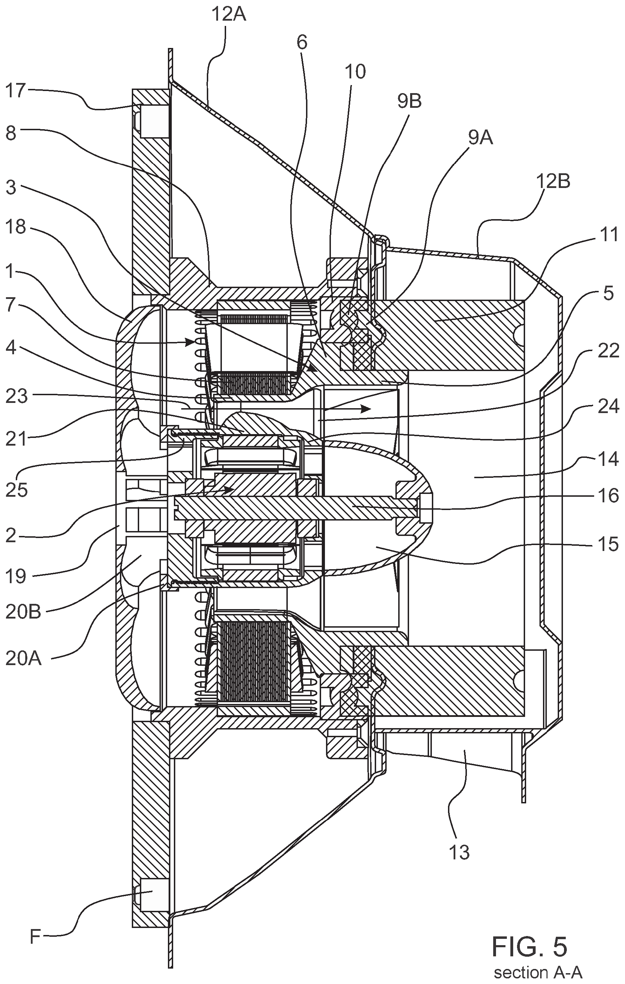

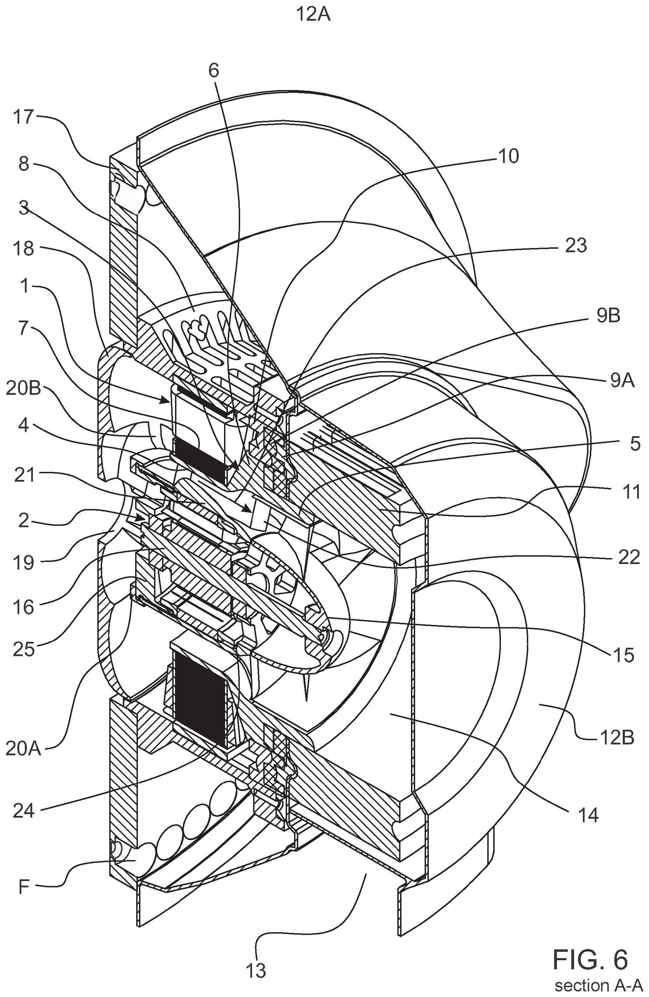

As illustrated in Figures 4, 5 and 6, the main configuration of the dosing device in this Utility Model is characterized by comprising two integrated electric motors (1, 2) concentrically mounted one inside the other and radially aligned in a same circular housing (3) which, in turn, is defined by two diameters, a smaller one (4) and a larger one (5), between which rises a mounting collar (6).

An internal stator (7) and a respective external rotor (8) of the electric motor (1) are fixed on the smaller diameter (4), while a sealing ring (9A), a backrest ring (9B) and a bearing (10) are arranged on the larger diameter (5), with the corresponding end of the external rotor (8) resting on the bearing (10).

In front of said rings are anchored concentrically a circular element (11), the external fairing (12A) and its respective cover (12B), both covering the whole assembly, with said cover (12B) having the lower seed inlet (13).

The external fairing (12A) and the cover (12B) combine to form a positive air pressure chamber (14), such pressure generated by a fan (15) which, in turn, is mounted on the shaft (16) of the electric motor (2) and is oriented towards the interior of said chamber (14), which, on the opposite side of said cover (12B), is closed by an usual annular perforated disc (17), whose internal diameter is fixed to the external diameter of the corresponding end of the external rotor (8) of the electric motor (1), and, at this same end, but on the internal diameter of the external rotor (8), is positioned a cover (18) having an air inlet formed by a central opening (19), around which the inner side of the cover includes a collar (20A) spaced by radial fins (20B), where support and ventilation of the corresponding end of the electric motor (2) are configured, and, at this same point, is fixed in a circular housing (21) concentric to the smaller diameter (4), with which it is interconnected by radial fins (22), where an air passage (23) is formed. On the inside, said housing (21) has two complementary parts for fixing the electric motor (2), one part being a step (24), at the front, and the other part being a rear cover (25), which is internally gridded and externally threaded to the corresponding end of the circular housing (21), thus trapping and ventilating said electric motor (2) of the fan (15). The rotation of the fan (15) can establish an airflow that enters through the opening (19) of the cover (18) and follows through the passage (23) to the chamber (14), where positive pressure is created.

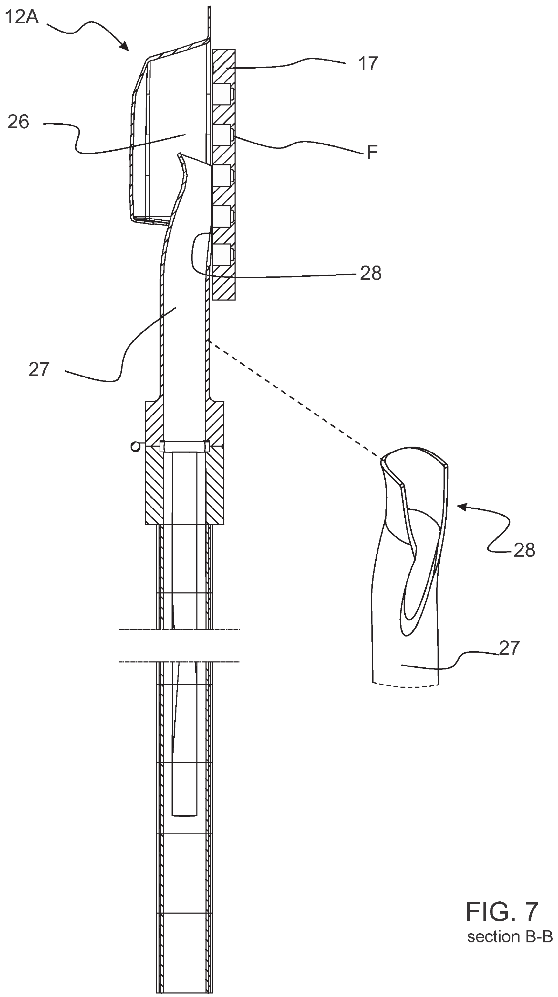

As shown in Fig. 7, the fairing (12A) has a small discharge chamber (26) tangentially positioned whose lower part is combined with the end of the conducting duct (27), which develops vertically downwards, where there is no positive pressure. The open upper end of said conducting duct (27) has an outlet nozzle (28), which has a vertically cut side that faces the inner surface of the usual disc (17), over the collar of holes (F), so that the seeds retained in such holes can be released over the outlet nozzle (28) to be directed into the interior of said conducting duct (27), and exit from the latter to the cultivation furrow existing in the soil.

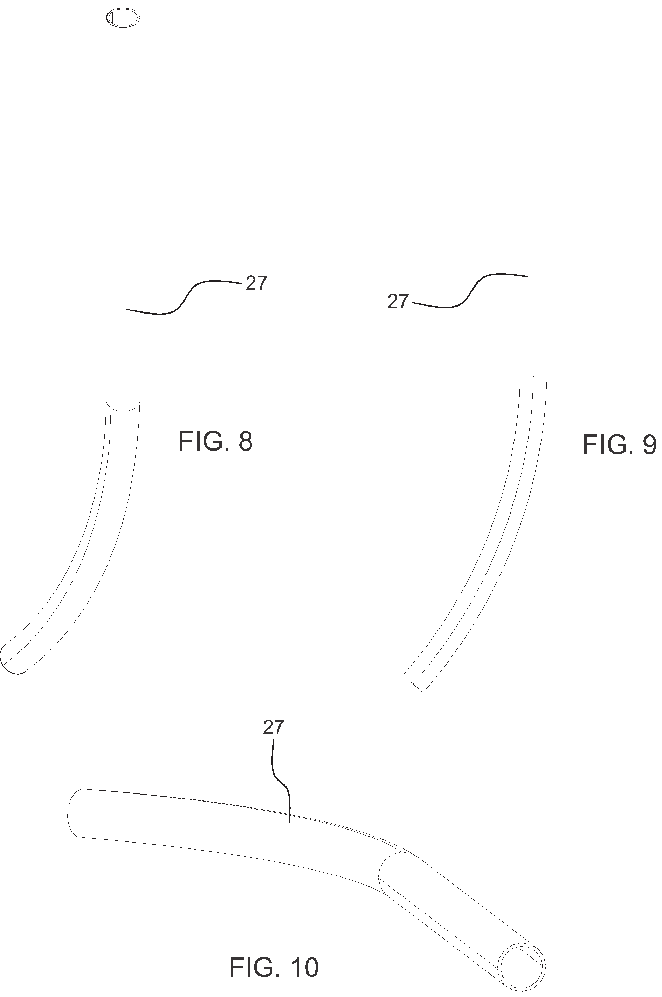

As can be seen from the whole set of figures, especially figures 1, 2, 3 and figures 8 to 10, the conducting duct (27) has a substantially cylindrical shape throughout its length. Furthermore, the conductor (27) has at least one curved portion disposed between its ends, preferably having the greatest curvature in the portion near or adjacent to its lower end, as best illustrated in figure 9.

The conducting duct (27) has angles between the straight surfaces or cross-sections or fictitious circular planes of the upper and lower ends, ranging from 30° to 55°, preferably 41.4°. The angle between the straight cross-section or fictitious circular plane of the lower end of said conducting duct (27) and the horizontal surface/plane, or between said cross-section and the ground, ranges from 0° to 60°, preferably 45°.

The length of the conducting duct (27), following its entire length, ranges from 405 to 755 mm, preferably 582 mm. Furthermore, the conducting duct (27) has an internal diameter ranging from 13 to 32 mm, preferably 19 mm. Also, the conducting duct (27) has a preferably flat or uniform internal surface, without any internal protrusions.

The aforementioned measurements of the conducting duct (27) are particular to allow for better efficiency of said conducting duct (27) and consequently of the dosing device in releasing seeds into the soil, so that the set of seeds is released into the soil uniformly, with each seed or set of seeds being deposited in the soil at regular and uniform distances from each other.

The conducting duct (27) is connected at its upper end with a seed outlet nozzle (28), which has the function of receiving and guiding or directing the seeds to exit towards said conducting duct (27), after said seeds are expelled from the holes (F) of the perforated disc (17) by an ejector device (29).

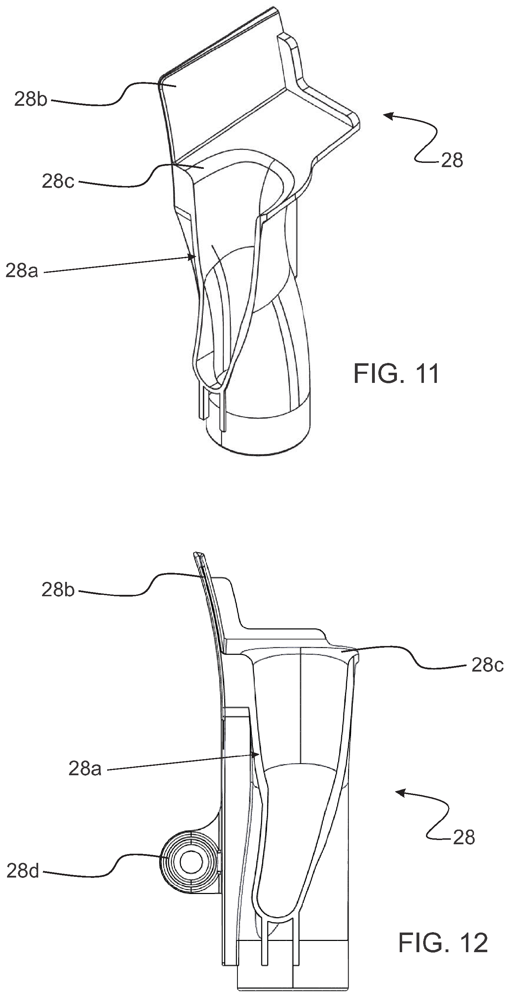

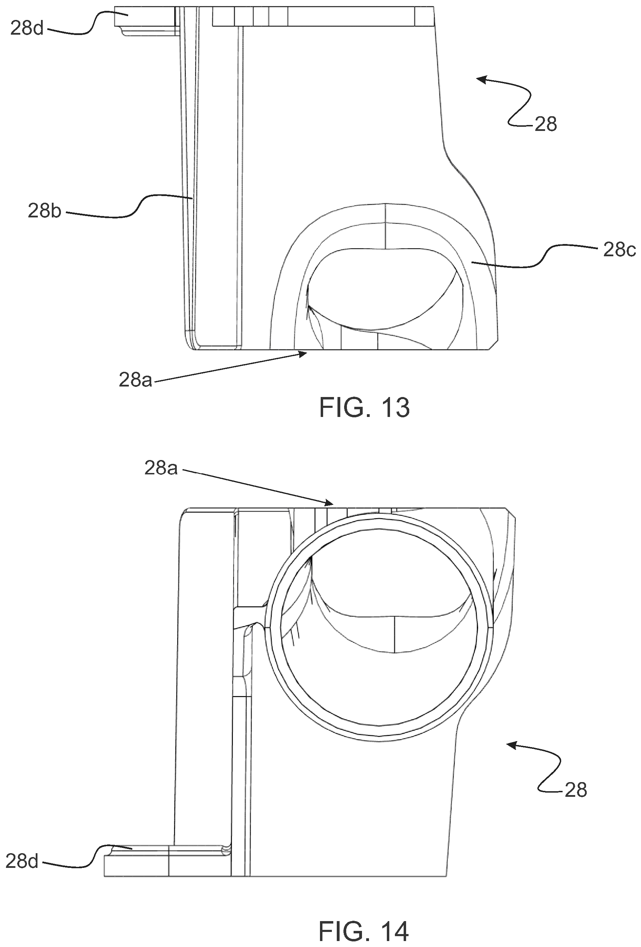

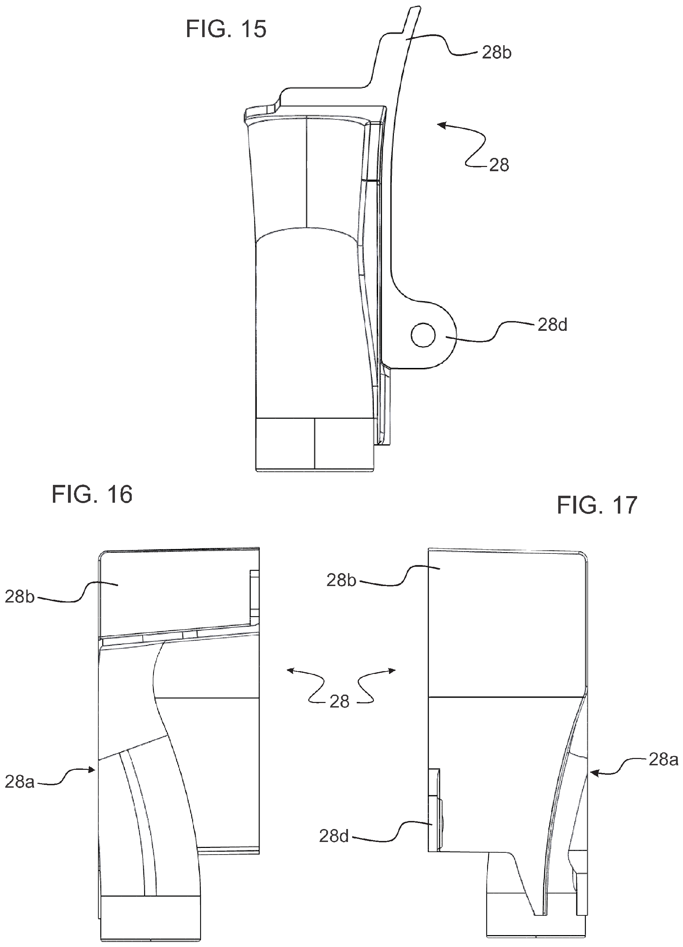

The outlet nozzle (28) is illustrated in Figure 7, and is further detailed in Figures 11 to 17. Said outlet nozzle (28) is connected to the conducting duct (27) through its lower end or portion, which preferably has a substantially cylindrical shape, or a shape adaptable to connect to the shape of the upper end of the conducting duct (27).

In a preferred configuration, the lower end of the outlet nozzle (28) is coupled to the upper end of the conducting duct (27), so that both elements maintain the same internal diameter, keeping the internal cross-section of the assembly (27, 28) flat and free of protrusions or imperfections. This configuration allows the seeds to pass or flow through both elements uniformly, without any mechanical obstacles in the way.

In an alternative configuration, the lower portion of said outlet nozzle (28) may have at least two sections having different diameters, i.e., a first section with diameter D1 and a second section with diameter D2, wherein the diameter D2 is smaller than diameter D1, allowing the insertion of the lower end of the outlet nozzle (28) into the interior of the conducting duct (27), so that the external surface of the second section having diameter D2 is in contact with the inner surface of the upper end of the conducting duct (27). Said outlet nozzle (28) has a side cutout or an additional piece having a cutout (28a) that connects the duct on at least one of its sides, as best illustrated by figure 11. Such side cutout (28a) is disposed against or adjacent to the surface of the perforated disc (17), so as not to create friction between the perforated disc (17) and the outlet nozzle (28). More specifically, the side cutout (28a) surrounds the entire area of the holes (F) that pass through the path of the outlet nozzle (28).

Furthermore, the outlet nozzle (28) is equipped with a vertical flap (28b), which prevents the seeds from falling out of the area of said nozzle (28). This arrangement of the outlet nozzle (28) creates an outlet compartment that ensures that all the seeds from the holes (F) always fall inside said outlet nozzle (28) and flow towards the conducting duct (27).

Additionally, the outlet nozzle (28) has a rounded edge (28c) or curved towards the conducting duct (27), which facilitates displacement or sliding into the interior of the conducting duct (27) of any seed that may be lodged on the upper surface of said nozzle (28).

The outlet nozzle (28) is fixed to the dosing device by means of fastening elements. More particularly, the outlet nozzle (28) is fixed inside the fairing of the dosing by at least one fastening element (28d), comprising screws, nuts, washers, or any other fastening elements through pressure and/or threading.

To allow the ejection of seeds from the holes (F) of the perforated disc (17), the dosing device of the present Utility Model is provided with an ejector device (29), which is disposed adjacent to the perforated disc (17), more specifically adjacent to the side or face of the perforated disc (17) opposite the face that houses the seeds in the holes (F). That is, the ejector device (29) is disposed adjacent to the face of the perforated disc (17) having the smaller diameter holes (F) of said disc (17), or having the smaller diameter holes (F) portion of said disc (17).

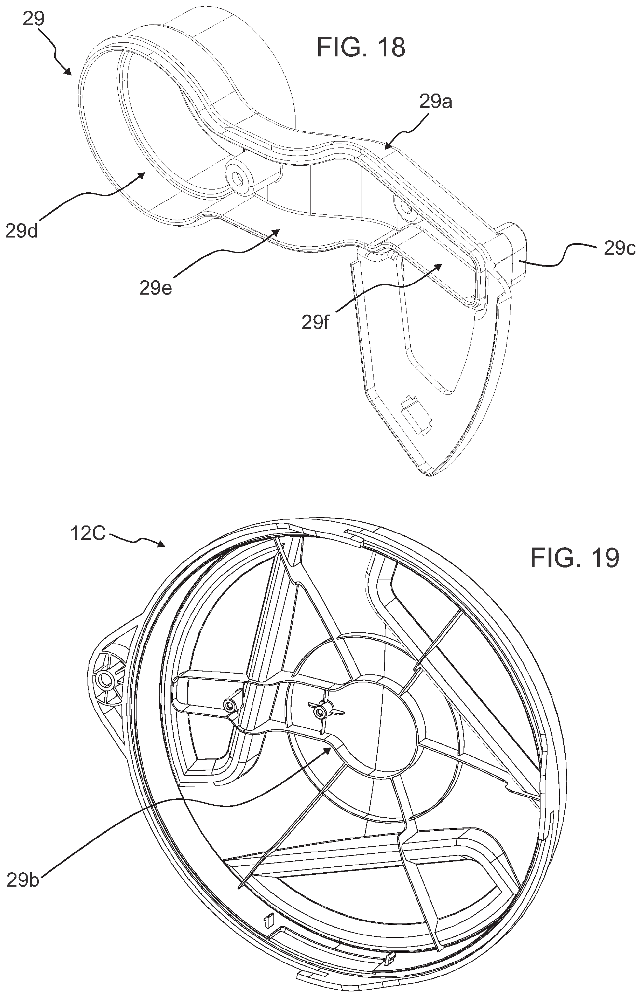

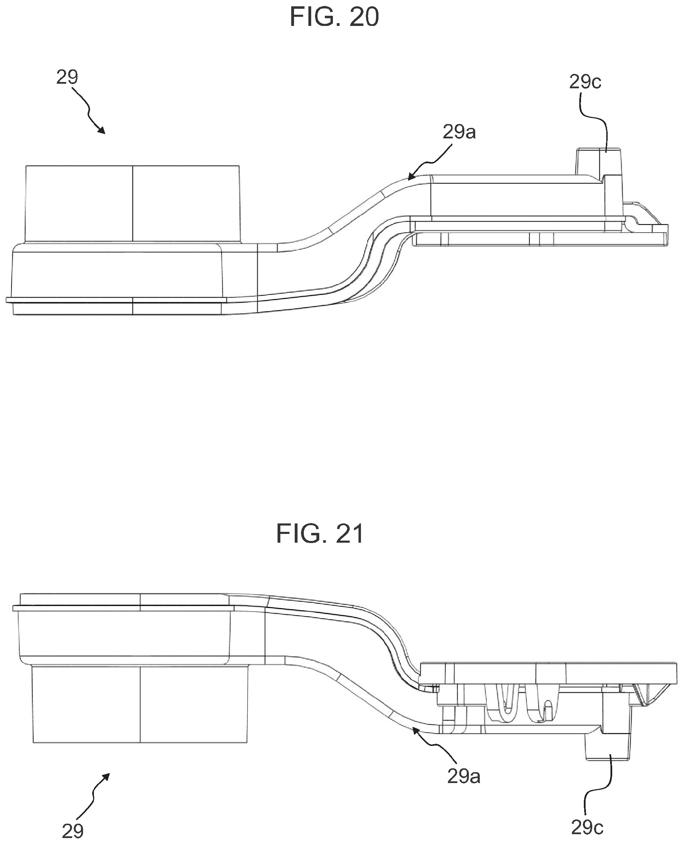

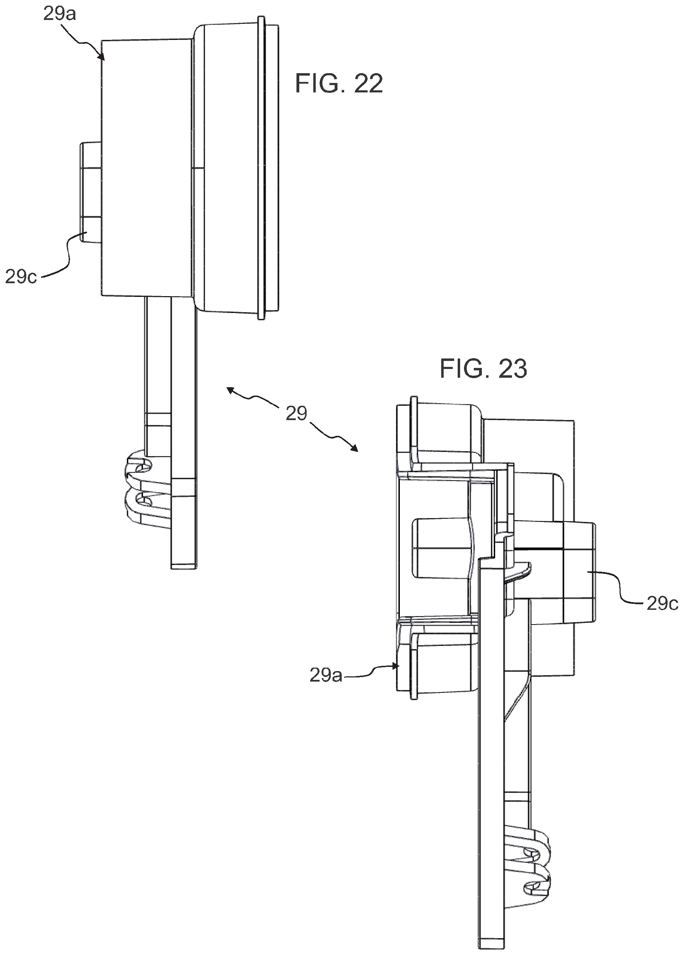

Said ejector device (29) refers to a seed ejection chamber, and can be seen in figures 18 to 26, being best illustrated by figure 18. As can be seen from figures 18 and 19, the ejector device (29) is formed by a first portion (29a) disposed adjacent to the perforated disc (17), and by a second portion (29b) disposed on the front cover (12C). Both portions (29a, 29b) are held together and closed by fasteners known in the prior art, preferably screws.

The closing of the ejector device (29) is essential because it is a pneumatic element that receives and directs an airflow generated by the dosing device turbine. The operation of the ejector device (29) occurs from the generation of an airflow by the dosing device turbine, such flow entering the ejector device (29) through a circular and wider portion of said ejector device (29), located in the central portion of the dosing device and the disc, and flowing to the most extreme portion of said ejector device (29).

Said portion of the end of the ejector device (29) refers to the thinnest or most slender portion of said ejector device (29), which ends with a projection (29c). Said projection (29c) extends towards the perforated disc (17), being the portion of the ejector device (29) effectively closest or adjacent to said disc (17).

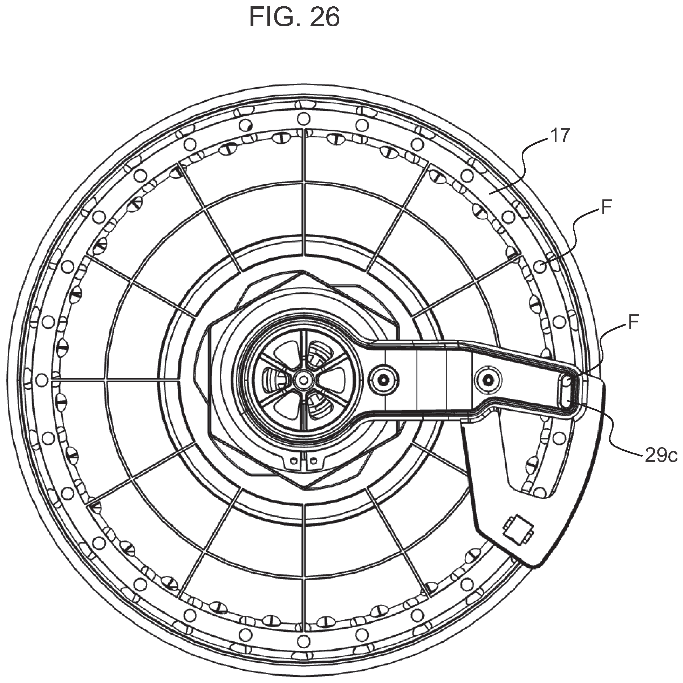

As can be seen from figure 26, the projection (29c) has an opening that covers the passage line of the holes (F) of the perforated disc (17), so that the airflow flowing through the projection (29c) of the ejector device (29) hits the seeds lodged in the holes (F), causing the seeds to be expelled from said holes (F) and fall into the outlet nozzle (28), then following towards the conducting duct (27) and consequently ending up deposited in the soil.

The projection (29c) of the ejector device (29) covers or surrounds at least one hole (F) of the perforated disc (17). Preferably, the projection (29c) covers at least two holes (F), and may also cover three or more holes (F), so that during operation the ejector device (29) expels all seeds that are lodged in each hole (F) located under the outlet area of the projection (29c).

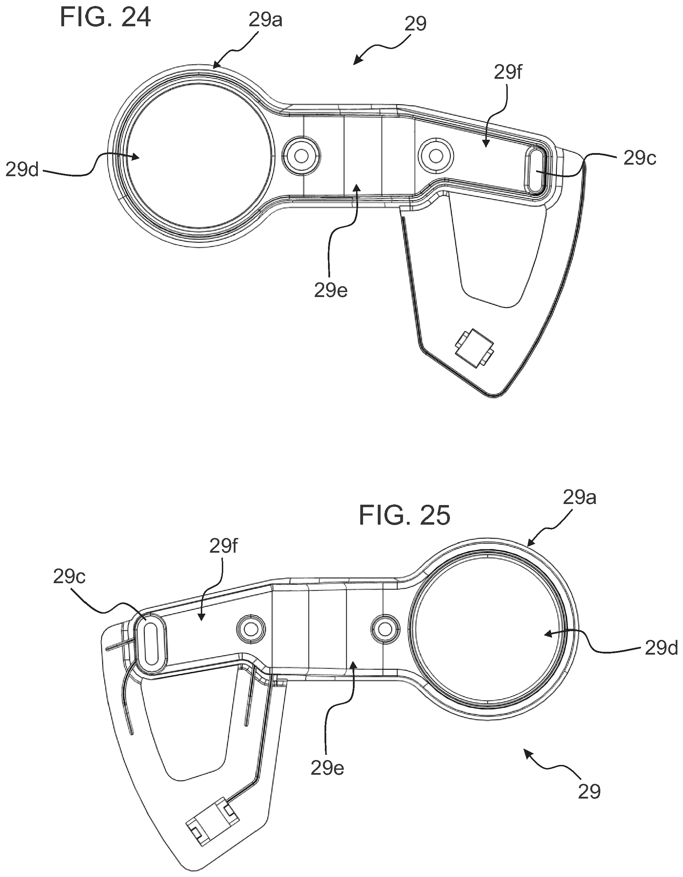

The ejector device (29) is shaped as a piece that has a larger diameter, width or volume at its air inlet end, and a smaller diameter, width or volume at its air outlet end. In a preferred configuration, the ejector device (29) is formed as a piece composed by three sections, being a first section (29d) having greater width or volume, a second section (29e) having intermediate width or volume, and a third section (29f) having smaller width or volume, as can be best observed from figure 24.

Additionally, the dosing device is provided with an air outlet (S) located in the lower portion of the front cover (12C), wherein said air outlet (S) has the function of exhaling the air flowing in the internal portion of the dosing device, and preventing dust, debris or other dirt from entering the interior of the dosing device, especially in the air circuit of said dosing device.

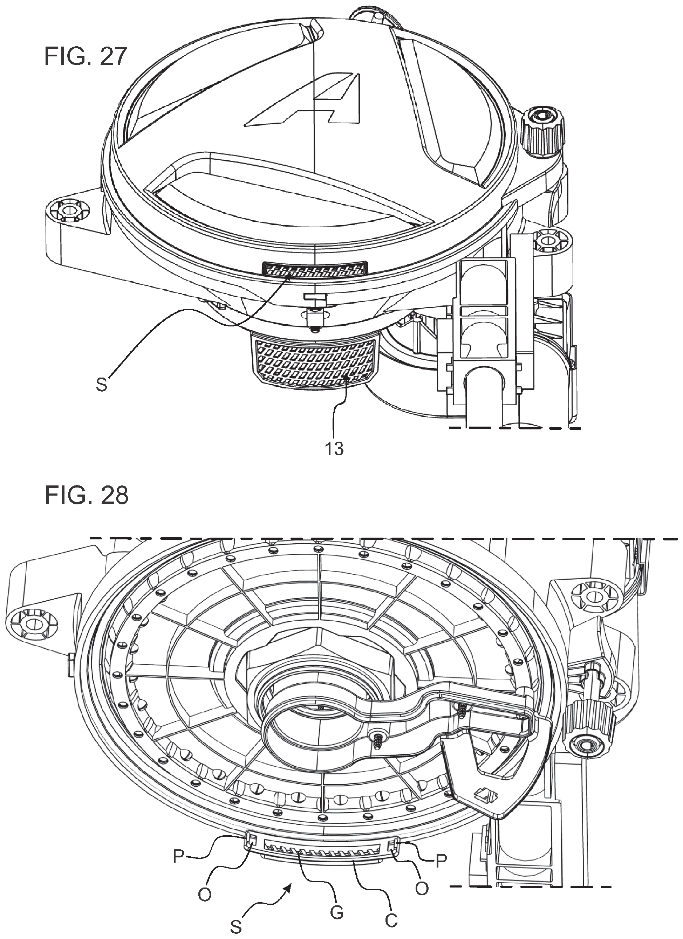

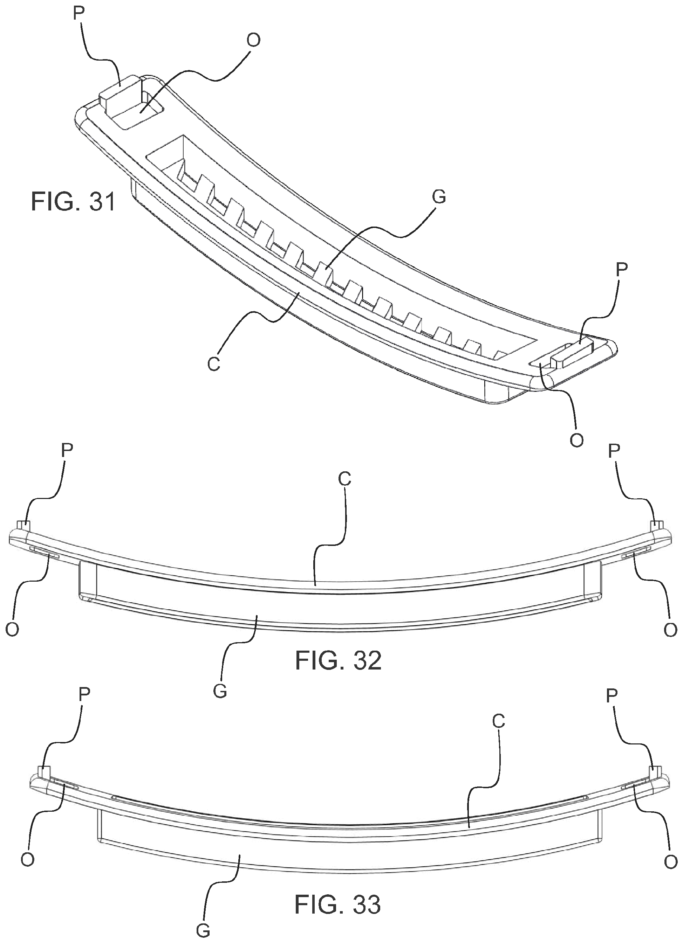

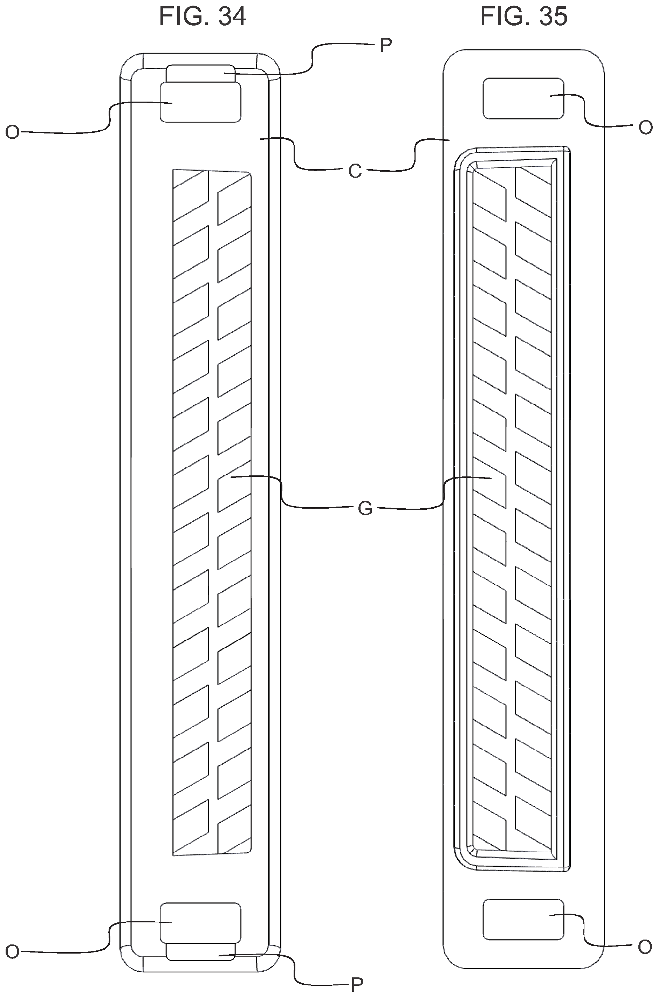

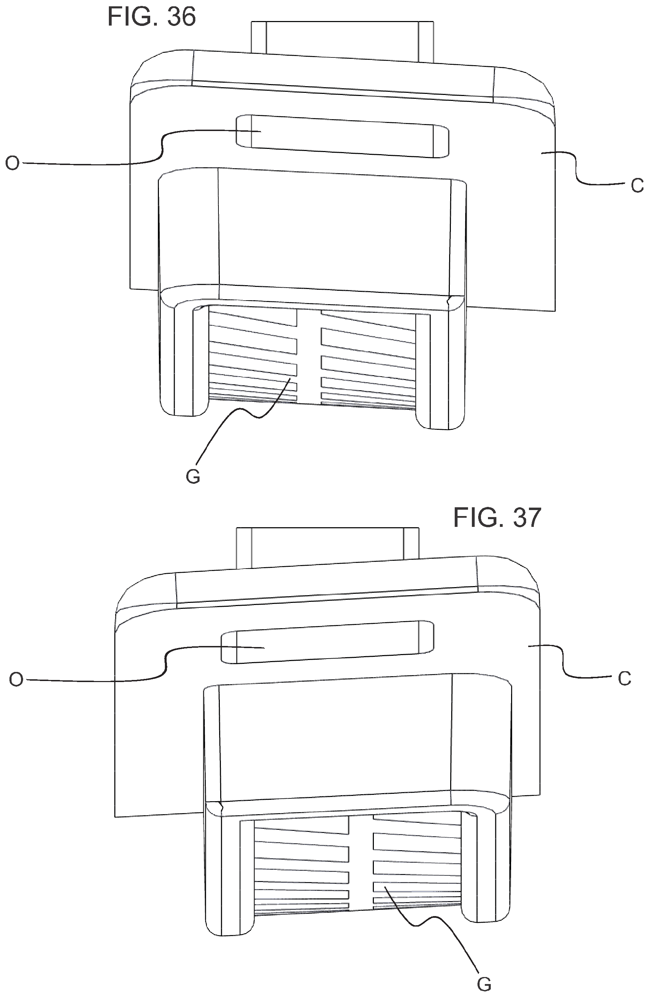

Said air outlet (S) is configured by means of a perforated grid (G) disposed in a plate (C), said plate (C) having two holes (O) disposed at its ends. Furthermore, two protrusions (P) are arranged adjacent to each orifice (O), as illustrated in figures 27 to 37, with said details being better observed in figure 31.

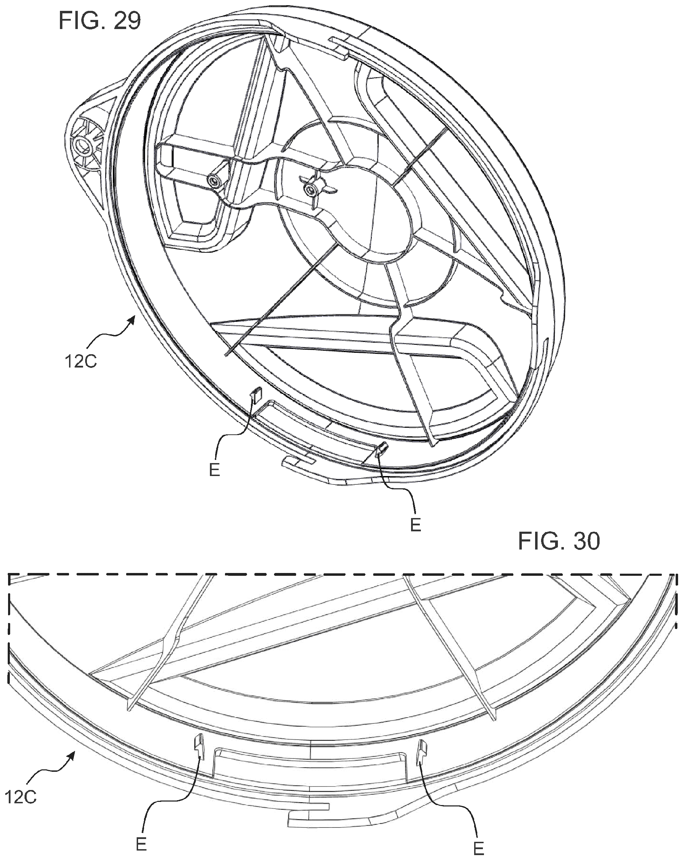

The said plate (C) is fixed to the lower portion of the front cover (12C) of the dispenser, so that the orifices (O) are inserted and coupled into fittings (E) arranged on the inner surface of said front cover (12C), with said fittings (E) attaching to the protrusions (P), as better illustrated in figure 30, providing stability and keeping the plate (C) fixed to the body of the front cover (12C).

Said configuration of the air outlet (S) of the dosing device formed through the plate (C) makes it modular, facilitating its placement and removal in case of maintenance or cleaning.

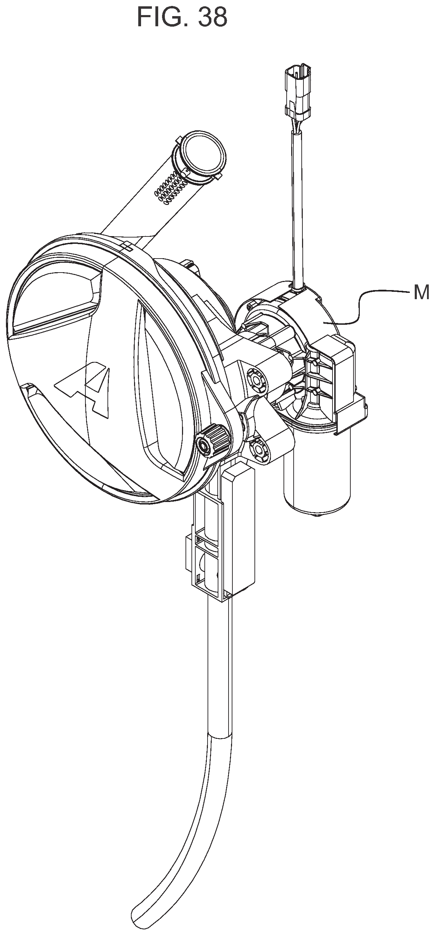

The dosing device of the present innovation is further characterized by having three constructive variants, in which the first constructive variant is endowed with all the elements and functional characteristics of the main configuration, with the exception of the concentric electric motors, in which in said first constructive variant, the electric motor for driving the perforated disc (17), previously concentric to the turbine motor, is arranged externally to the body or housing of the dosing device; more specifically, the electric motor (M) for driving the perforated disc (17) is arranged in the rear portion of the dosing device, as illustrated in figure 38, being fixed to the housing of the dosing device by means of fastening elements, comprising at least one element such as screws, nuts, or washers, or any other fastening elements through pressure, threading or engagement.

In a second constructive variant, the dosing device is equipped with all the elements and functional characteristics of the main configuration, except for the motor for driving the perforated disc (17), so that, in place of said motor, the perforated disc (17) is driven by means of at least one cardan shaft, chain or flexible shaft, coupled externally to an agricultural or seeder machine. Additionally, said second constructive variant is equipped with a mechanical or electronic clutch that has the function of allowing or not the entry of seeds into the conducting duct, allowing control of the seed drop from the dosing device. Said clutch is preferably disposed adjacent to the conducting duct or to the lower portion of the dosing device, preferably having direct mechanical or electrical contact with the seed outlet portion.

In a third constructive variant, the dosing device is also equipped with all the elements and functional characteristics of the main configuration, except for the motor for driving the perforated disc (17), so that, in place of said motor, the perforated disc (17) is driven by means of a cardan shaft, chain or flexible shaft, coupled to an agricultural or seeder machine; unlike the second constructive variant, the third variant excludes the use of said clutch for controlling seed drop, being a less complex and more comprehensive constructive variant of said dosing device.

In both the main configuration and the constructive variants, the dosing device is equipped with a brushless direct current (BLDC) motor for driving the turbine. In the main configuration, said brushless motor is also used as a means of driving the perforated disc (17), which makes the dosing device of the present innovation more reliable, more energy efficient and less susceptible to maintenance and operation stoppages.

Optionally, in the constructive variants of the dosing device of the present Utility Model, all the mechanical and/or electrical elements necessary for fixing or coupling the previously concentric electric motor of the main configuration may be retained, replaced or removed from the dosing device, for coupling the external motor or the cardan shaft, chain or flexible shaft of the constructive variants.

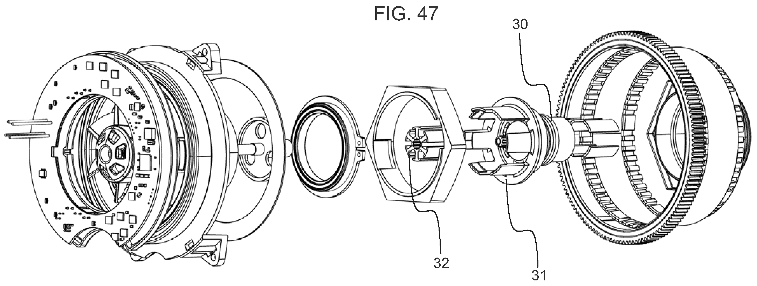

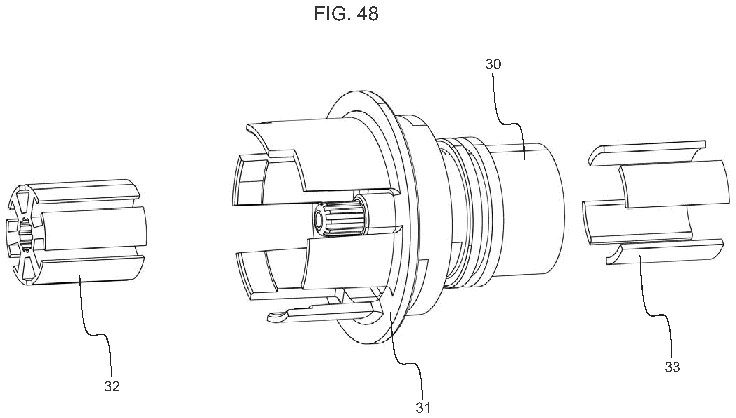

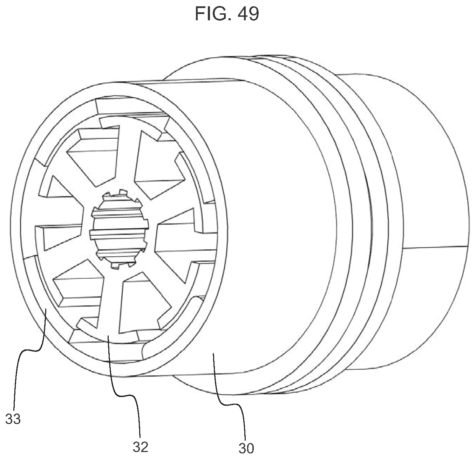

Optionally, the turbine assembly of the dosing device of the present invention uses a motor having a rotor (30) external to the stator (32), as illustrated in figures 47 to 49, said elements being mounted around a stator support (31), wherein said motor also uses permanent magnets (33) and preferably is also configured as a brushless motor. Furthermore, the same mechanical mounting elements of the motor assembly of the main configuration of the dosing device are preferably used for mounting the turbine assembly in the configuration of the turbine assembly comprising external rotor.

As can be seen from what has been presented and illustrated, the object in question, i.e., a constructive arrangement of a seed dosing device having positive air pressure, fits perfectly within the criteria that define the present innovation, both in its main configuration and in its constructive variants, since, in addition to being susceptible to industrial application, it also presents a new form or arrangement, involving an inventive act or inventive activity, which results in an improvement in its manufacture and use, since the advantages previously mentioned are realized with the arrangement of two electric motors or with a brushless electric motor for driving the turbine, in which, in its main configuration, said electric motors (1) and (2) are concentrically mounted in the same housing (3), wherein the first electric motor (1) rotates the perforated disc (17), while the other electric motor establishes a continuous airflow from outside to inside created by the fan (15); thus, inside the chamber (14), the positive pressure airflow establishes the movement of the seeds towards the face in the perforated disc (17), where the seeds also undergo centrifugal force and thus move towards the collar of holes (F) of said disc, with each hole accommodating a seed, keeping it stable in this position, until the seeds reach the chamber (26) where there is no positive pressure; in this way, each seed is released inside the conducting duct (27) until it falls inside the cultivation furrow previously made in the soil.

## Claims

1. CONSTRUCTIVE ARRANGEMENT OF A SEED DOSING DEVICE HAVING POSITIVE AIR PRESSURE, of a type to be used in different automatic seeding machines; said dosing device is configured as a box totally closed by an external fairing (12A) shaped as a truncated cone, where its smaller base is closed by a circular cover (12B) and, on the opposite side, the closure is achieved by a rotating perforated disc (17), having at least a series of holes (F) forming a collar, which, on the inside, are selectors for the seeds to be dosed, such seeds being introduced through the lower part of the said circular cover (12B), where there is an inlet (13), while the exit of the seeds occurs by means of a seed conducting duct (27) tangentially inserted in a lateral flattening of the external fairing (12A), **wherein** said dosing device comprises two integrated electric motors (1, 2) concentrically mounted one inside the other and radially aligned in a same circular housing (3) which, in turn, is defined by two diameters, a smaller one (4) and a larger one (5), between which rises a mounting collar (6); an internal stator (7) and a respective external rotor (8) of the electric motor (1) are fixed on the smaller diameter (4), while a sealing ring (9A), a backrest ring (9B) and a bearing (10) are arranged on the larger diameter (5), with the corresponding end of the external rotor (8) resting on the bearing (10); in front of said rings are anchored concentrically a circular element (11), the external fairing (12A) and its respective cover (12B), both covering the whole assembly; the external fairing (12A) and the cover (12B) combine to form a positive air pressure chamber (14), such pressure generated by a fan (15), which is mounted on the shaft (16) of the electric motor (2) and is oriented towards the interior of said chamber (14), which, on the opposite side of said cover (12B), is closed by an usual annular perforated disc (17), whose internal diameter is fixed to the external diameter of the corresponding end of the external rotor (8) of the electric motor (1), and, at this same end, but on the internal diameter of the external rotor (8), is positioned a cover (18) having an air inlet formed by a central opening (19), around which the inner side of the cover includes a collar (20A) spaced by radial fins (20B), where support and ventilation of the corresponding end of the electric motor (2) are configured, and, at this same point, is fixed in a circular housing (21) concentric to the smaller diameter (4), with which it is interconnected by radial fins (22), where an air passage (23) is formed; on the inside, said housing (21) has two complementary parts for fixing the electric motor (2), one part being a step (24), at the front, and the other part being a rear cover (25), which is internally gridded and externally threaded to the corresponding end of the circular housing (21); said fairing (12A) has a small discharge chamber (26) tangentially positioned whose lower part is combined with the end of the conducting duct (27), which develops vertically downwards, where there is no positive pressure; the open upper end of said conducting duct (27) has a side cut vertically (28) that faces the inner surface of the usual disc (17), over the collar of holes (F).

2. CONSTRUCTIVE ARRANGEMENT OF A SEED DOSING DEVICE HAVING POSITIVE AIR PRESSURE, according to claim 1, **wherein,** in a first constructional variant, the electric motor for driving the perforated disc (17), previously concentric to the electric motor for driving the turbine, is replaced by an electric motor (M) external to the dosing device housing, said motor (M) being preferably arranged in the rear portion of the dosing device.

3. CONSTRUCTIVE ARRANGEMENT OF A SEED DOSING DEVICE HAVING POSITIVE AIR PRESSURE, according to claim 1, **wherein,** in a second constructional variant, the electric motor for driving the perforated disc (17), previously concentric to the electric motor for driving the turbine, is replaced by a cardan shaft, chain or flexible shaft coupled to an agricultural or seeder machine, wherein the said dosing device of the said second constructional variant also has coupled a mechanical or electronic clutch that allows admitting or blocking the entry of seeds into the conducting duct (17).

4. CONSTRUCTIVE ARRANGEMENT OF A SEED DOSING DEVICE HAVING POSITIVE AIR PRESSURE, according to claim 1, **wherein,** in a third constructional variant, the electric motor for driving the perforated disc (17), previously concentric to the electric motor for driving the turbine, is replaced by a cardan shaft, chain or flexible shaft coupled to an agricultural or seeder machine.

5. CONSTRUCTIVE ARRANGEMENT OF A SEED DOSING DEVICE HAVING POSITIVE AIR PRESSURE, according to any of claims 1 to 4, **wherein** the conducting duct (27) has a cylindrical shape having at least one curved portion, in which the angle between the straight surfaces or cross-sections of the upper and lower ends of said conducting duct (27) ranges from 30° to 55°, preferably 41.4°, the angle between the cross-section of the lower end and the horizontal plane or ground ranges from 0° to 60°, preferably 45°, and the length of said conducting duct (27) ranges from 405 mm to 755 mm, preferably 582 mm.

6. CONSTRUCTIVE ARRANGEMENT OF A SEED DOSING DEVICE HAVING POSITIVE AIR PRESSURE, according to any one of claims 1 to 4, **wherein** said dosing device has an outlet nozzle (28) coupled to said conducting duct (27), with said outlet nozzle (28) being configured with a side cutout or additional piece (28a) on at least one side of said nozzle (28), said side cutout or additional piece (28a) being disposed adjacent to the surface of the perforated disc (17) and surrounding the entire area of the holes (F); said outlet nozzle (28) is also provided with a vertical flap (28b) having a rounded edge (28c) for displacing the seeds into said conducting duct (27).

7. CONSTRUCTIVE ARRANGEMENT OF A SEED DOSING DEVICE HAVING POSITIVE AIR PRESSURE, according to any one of claims 1 to 4, **wherein** said dosing device has an ejector device (29) adjacent to the side of the perforated disc (17) having the smaller diameter holes (F) of said disc (17), with a first portion (29a) of the ejector device (29) being disposed adjacent to the perforated disc (17) and a second portion (29b) being disposed on the front cover (12C), and both portions (29a, 29b) being joined and closed by fastening elements; the thinner or slender end of said ejector device (29) is configured with a projection (29c) that extends towards said perforated disc (17), and said projection (29c) has an opening that encompasses the holes (F) of the perforated disc (17).

8. CONSTRUCTIVE ARRANGEMENT OF A SEED DOSING DEVICE HAVING POSITIVE AIR PRESSURE, according to any one of claims 1 to 4, **wherein** said dosing device has an air outlet (S) configured by means of a perforated grid (G) disposed in a plate (C), said plate (C) having two holes (O) disposed at its ends, also containing two protrusions (P) adjacent to said holes (O), with said plate (C) being fixed to the lower portion of the front cover (12C) of the dosing device, such that said holes (O) are inserted and coupled to fittings (E) disposed on the inner surface of said front cover (12C), with said fittings (E) attaching to the protrusions (P).
